# EUROPÄISCHE PATENTSCHRIFT

(11) **EP 1 739 331 B1**
(45) Veröffentlichungstag und Bekanntmachung des Hinweises auf die Patenterteilung: **06.06.2007**
(21) Anmeldenummer: 05013994.8
(22) Anmeldetag: 29.06.2005
(51) Int. Cl.: F16J 15/32

(54) **Abstreifring**
Scraper
Dégazolineur

(43) Veröffentlichungstag der Anmeldung: 03.01.2007
(73) Patentinhaber: Carl Freudenberg KG, 69469 Weinheim (DE)
(72) Erfinder: Freitag, Edgar, 34613 Schwalmstadt (DE); Braun, Otmar, 34621 Frielendorf (DE)

(56) Entgegenhaltungen:
- EP-A- 0 104 504
- DE-A1- 3 244 209
- DE-A1- 19 825 428
- DE-A1- 19 936 462

## Beschreibung

### Technisches Gebiet

Die Erfindung betrifft einen Abstreifring, umfassend einen Stützkörper, an dem eine in Richtung des abzudichtenden Raums angeordnete erste Dichtlippe, eine auf der dem abzudichtenden Raum abgewandten Seite angeordnete Abstreiflippe sowie zumindest eine statisch beanspruchte zweite Dichtlippe festgelegt sind.

### Stand der Technik

Derartige Abstreifringe sind aus der DE 199 36 462 A1 bekannt. Abstreifringe werden häufig in einem Hydraulikzylinder eingesetzt. Dabei wird der Abstreifring mit einem Nutring kombiniert, wobei der Nutring dem Drucksystem zugewandt ist und der Abstreifring dem Nutring in Richtung der Umgebung vorgelagert ist. Während des Betriebs kann sich zwischen der ersten Dichtlippe des Abstreifrings und dem Nutring ein Druck aufbauen, der dazu führen kann, dass der Abstreifring aus seinem Einbauraum herausgedrückt wird. Zur Druckentlastung ist es bekannt, Öffnungen in dem Elastomerkörper des Abstreifrings vorzusehen und so eine Verbindung zwischen der Umgebung dem durch den Nutring und dem Abstreifring begrenzten Zwischenraum herzustellen. Diese Öffnungen sind aufwendig in der Herstellung und der in den Elastomer eingebrachte Querschnitt der Öffnungen kann durch Quellvorgänge oder starke Druckschwankungen variieren.
Derartige Abstreifringe sind aus der DE 32 44 209 A1 bekannt.

### Darstellung der Erfindung

Der Erfindung liegt die Aufgabe zugrunde, einen Abstreifring mit einer Druckentlastung bereitzustellen, der einfach herstellbar ist und der einen konstanten Querschnitt aufweist.

Diese Aufgabe wird mit den Merkmalen von Anspruch 1 gelöst. Auf vorteilhafte Ausgestaltungen nehmen die Unteransprüche Bezug.

Zur Lösung der Aufgabe weist der Stützkörper an seinem Außenumfang zumindest eine in axialer Richtung verlaufende Ausnehmung auf. Die Ausnehmung verläuft entlang des Axialflansches des Stützrings stellt dabei eine Verbindung zwischen der Umgebung und dem durch den Nutring und dem Abstreifring begrenzten Zwischenraum her. Wenn kein Überdruck in dem Zwischenraum vorhanden ist, ist die Öffnung der erfindungsgemäßen Ausnehmung in Richtung der Umgebung allerdings durch die zweite Dichtlippe verschlossen. Erst wenn sich ein ausreichender Überdruck aufgebaut hat, wird die zweite Dichtlippe angehoben und es findet ein Druckausgleich statt. Dadurch ist sichergestellt, dass keine Verschmutzungen von außerhalb in den Zwischenraum eindringen können, die zu einem vorzeitigen Verschleiß führen. Da die Ausnehmung in den formstabilen Stützring eingebracht ist, ist der Querschnitt der Ausnehmung konstant und unempfindlich gegenüber Quellvorgängen durch eindringendes Schmiermittel sowie Druckschwankungen. Der Stützring ist dabei vorteilhafterweise aus einem metallischen Werkstoff hergestellt, welcher einfach zu verarbeiten ist, In den Stützung kann mit einfachen Mitteln, beispielsweise durch Fräsen oder Schleifen eine Ausnehmung vorgesehen werden. Wenn der Stützkörper als Stanzteil ausgebildet ist, kann die Ausnehmung besonders einfach bei der Formgebung des Stützkörpers vorgesehen werden, so dass dazu keine zusätzlichen Fertigungsschritte erforderlich sind.

Die Ausnehmung kann durch eine Nut gebildet sein. Die Nut kann dabei trapezförmig oder halbkreisförmig ausgebildet sein, da diese Formen besonders einfach in einem Stanzwerkzeug vorgesehen werden können und dadurch besonders einfach herstellbar sind.

Benachbart zu der zweiten Dichtlippe können auf der dem abzudichtenden Raum zugewandten Seite Abstandsnoppen angeordnet sein. Durch die Abstandnoppen ist eine durchgehende Öffnung von dem Zwischenraum bis unmittelbar vor die zweite Dichtlippe sichergestellt. Die Abstandsnoppen stellen darüber hinaus eine Montagehilfe dar, da sie formstabil sind und definierte Berührungspunkte bilden. Dadurch ist sichergestellt, dass die zweite Dichtlippe mit einer definierten Vorspannung an der Gegenfläche anliegt.

Die Abstandsnoppen können aus dem Stützkörper ausgebildet sein. Dadurch sind die Abstandsnoppen besonders einfach, beispielsweise in einem Stanzverfahren bei der Formgebung des Stützkörpers, herstellbar.

Über den Umfang verteilt können drei Abstandsnoppen angeordnet sein. Der Abstreifring ist gegen Verkippen oder Verkanten gesichert, wenn über den Umfang mindestens drei oder vier Abstandsnoppen angeordnet sind. Die Abstandsnoppen sind dabei über den Umfang verteilt gleichmäßig angeordnet.

Die zweite Dichtlippe und die Abstandsnoppen können sich in axialer Richtung flanschabgewandt unterschiedlich weit erstrecken. In einer Ausgestaltung kann dann ein kleiner Spalt zwischen zweiter Dichtlippe und Gegenfläche vorgesehen sein, wenn sich die Abstandsnoppen weiter erstrecken als die zweite Dichtlippe. In der vorteilhaften zweiten Ausgestaltung kann sich die zweite Dichtlippe weiter erstreckt als die Abstandsnoppen. Dann liegt die zweite Dichtlippe mit Vorspannung an der Gegenfläche an und der abzudichtende Raum ist gegen Verschmutzungen und auch eindringende Flüssigkeiten, beispielsweise Wasser, geschützt.

Der Stützkörper kann einen radial nach außen verlaufenden Flansch aufweisen. Dadurch erstreckt sich der Abstreifring in radialer Richtung und überdeckt eine größere Fläche.

Die zweite Dichtlippe kann an der kreisringförmigen Stirnfläche des Flansches festgelegt sein. Dadurch vergrößert sich die überdeckte Fläche in radialer Richtung, so dass beispielsweise mehrteilige Gehäuse, Rohre mit Einsteckzylinderköpfen gebildet sein können, überdeckt und vor Verschmutzungen geschützt sind.

### Kurzbeschreibung der Zeichnung

Ein Ausführungsbeispiel des erfindungsgemäßen Abstreifrings wird anhand der Figur näher erläutert. Diese zeigt schematisch:

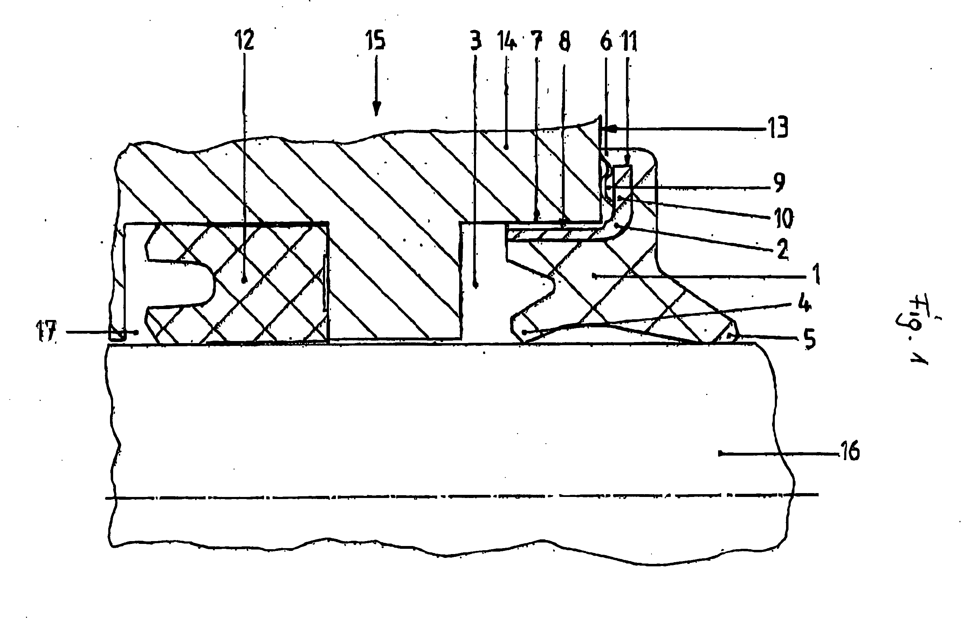

Fig. 1 eine Dichtungsanordnung mit einem erfindungsgemäßen Abstreifring.

### Ausführung der Erfindung

Figur 1 zeigt einen Abstreifring 1 mit einem Stützkörper 2, an dem eine in Richtung des abzudichtenden Raums 3 angeordnete erste Dichtlippe 4, eine auf der dem abzudichtenden Raum 3 abgewandten Seite angeordnete Abstreiflippe 5 sowie zumindest eine statisch beanspruchte zweite Dichtlippe 6 festgelegt sind. Der Stützkörper 2 ist aus einem metallischen Werkstoff und ist als Stanzteil ausgebildet. Der abzudichtende Raum 3 ist durch den Zwischenraum gebildet, der durch die erste Dichtlippe 4 und einem Nutring 12 begrenzt ist. Der Stützkörper 2 weist an seinem Außenumfang 7 eine in axialer Richtung verlaufende Ausnehmung 8 auf, die in dieser Ausführung durch eine halbkreisförmige Nut gebildet ist. Die Ausnehmung 8 wurde in einem Fertigungsschritt mit der Formgebung durch Stanzen des Stützrings 2 hergestellt. Benachbart zu der zweiten Dichtlippe 6 sind auf der dem abzudichtenden Raum 3 zugewandten Seite drei Abstandsnoppen 9 angeordnet. Die Abstandsnoppen 9 sind aus dem Stützkörper 2 ausgebildet und ebenfalls in dem Stanzvorgang hergestellt. Der Stützkörper 2 weist einen radial nach außen verlaufenden Flansch 10 auf, an dem die Abstandsnoppen 9 und die zweite Dichtlippe 6 angeordnet sind, wobei die zweite Dichtlippe 6 an der kreisringförmigen Stirnfläche 11 des Flansches 10 festgelegt ist. Die zweite Dichtlippe 6 und die Abstandsnoppen 9 erstrecken sich in axialer Richtung flanschabgewandt unterschiedlich weit, wobei sich die zweite Dichtlippe 6 weiter erstreckt als die Abstandsnoppen 9. Dadurch liegt die zweite Dichtlippe 6 nach der Montage mit Vorspannung an der Gegenfläche 13 des Gehäuses 14 an. In dieser Ausführung ist das Gehäuse 14 durch einen Hydraulikzylinder gebildet. Die Dichtungsanordnung 15 aus Nutring 12 und erfindungsgemäßem Abstreifring 1 dichtet den durch den Hydraulikzylinder und Hydraulikkolben 16 gebildeten Arbeitsraum 17 ab.

## Patentansprüche

1. Abstreifring (1), umfassend einen Stützkörper (2), an dem eine in Richtung des abzudichtenden Raums (3) angeordnete erste Dichtlippe (4), eine auf der dem abzudichtenden Raum (3) abgewandten Seite angeordnete Abstreiflippe (5) sowie zumindest eine statisch beanspruchte zweite Dichtlippe (6) festgelegt sind, **dadurch gekennzeichnet, dass** der Stützkörper (2) an seinem Außenumfang (7) zumindest eine in axialer Richtung verlaufende Ausnehmung (8) aufweist.

2. Abstreifring nach Anspruch 1, **dadurch gekennzeichnet, dass** die Ausnehmung (8) durch eine Nut gebildet ist.

3. Abstreifring nach Anspruch 1 oder 2, **dadurch gekennzeichnet, dass** der Stützkörper (2) durch ein Stanzteil gebildet ist.

4. Abstreifring nach einem der Ansprüche 1 bis 3, **dadurch gekennzeichnet, dass** benachbart zu der zweiten Dichtlippe (6) auf der dem abzudichtenden Raum (3) zugewandten Seite Abstandsnoppen (9) angeordnet sind.

5. Abstreifring nach Anspruch 4, **dadurch gekennzeichnet, dass** die Abstandsnoppen (9) aus dem Stützkörper (2) ausgebildet sind.

6. Abstreifring nach Anspruch 4 oder 5, **dadurch gekennzeichnet, dass** über den Umfang verteilt drei Abstandsnoppen (9) an dem Stützkörper (2) angeordnet sind.

7. Abstreifring nach einem der Ansprüche 1 bis 6, **dadurch gekennzeichnet, dass** der Stützkörper (2) einen radial nach außen verlaufenden Flansch (10) aufweist.

8. Abstreifring nach Anspruch 7, **dadurch gekennzeichnet, dass** sich die zweite Dichtlippe (6) und die Abstandsnoppen (9) in axialer Richtung flanschabgewandt unterschiedlich weit erstrecken.

9. Abstreifring nach Anspruch 8, **dadurch gekennzeichnet, dass** sich die zweite Dichtlippe (6) weiter erstreckt als die Abstandsnoppen (9).

10. Abstreifring nach einem der Ansprüche 7 bis 9, **dadurch gekennzeichnet, dass** die zweite Dichtlippe (6) an der kreisringförmigen Stirnfläche (11) des Flansches (10) festgelegt ist.

## Claims

1. Wiper ring (1), comprising a supporting body (2), to which a first sealing lip (4) arranged in the direction of the space (3) to be sealed off, a wiper lip (5) arranged on the side facing away from the space (3) to be sealed off and at least one statically stressed second sealing lip (6) are fixed, **characterized in that** the supporting body (2), at its outer circumference (7), has at least one recess (8) running in the axial direction.

2. Wiper ring according to Claim 1, **characterized in that** the recess (8) is formed by a groove.

3. Wiper ring according to Claim 1 or 2, **characterized in that** the supporting body (2) is formed by a punched part.

4. Wiper ring according to one of Claims 1 to 3, **characterized in that** spacer studs (9) are arranged adjacent to the second sealing lip (6) on the side facing the space (3) to be sealed off.

5. Wiper ring according to Claim 4, **characterized in that** the spacer studs (9) are formed from the supporting body (2).

6. Wiper ring according to Claim 4 or 5, **characterized in that** three spacer studs (9) are arranged on the supporting body (2) in a distributed manner over the circumference.

7. Wiper ring according to one of Claims 1 to 6, **characterized in that** the supporting body (2) has a flange (10) running radially outwards.

8. Wiper ring according to Claim 7, **characterized in that** the second sealing lip (6) and the spacer studs (9) extend by different distances away from the flange in the axial direction.

9. Wiper ring according to Claim 8, **characterized in that** the second sealing lip (6) extends further than the spacer studs (9).

10. Wiper ring according to one of Claims 7 to 9, **characterized in that** the second sealing lip (6) is fixed to the annular end face (11) of the flange (10).

## Revendications

1. Dégazolineur (1), comprenant un corps de support (2) sur lequel sont fixées une première lèvre d'étanchéité (4) disposée dans la direction de l'espace à étanchéifier (3), une lèvre de grattage (5) disposée du côté opposé à l'espace à étanchéifier (3) ainsi qu'au moins une deuxième lèvre d'étanchéité (6) sollicitée statiquement, **caractérisé en ce que** le corps de support (2) présente sur sa périphérie extérieure (7) au moins un évidement (8) s'étendant dans la direction axiale.

2. Dégazolineur selon la revendication 1, **caractérisé en ce que** l'évidement (8) est formé par une rainure.

3. Dégazolineur selon la revendication 1 ou 2, **caractérisé en ce que** le corps de support (2) est formé par une pièce estampée.

4. Dégazolineur selon l'une quelconque des revendications 1 à 3, **caractérisé en ce que** des boutons d'espacement (9) sont disposés à proximité de la deuxième lèvre d'étanchéité (6) du côté tourné vers l'espace à étanchéifier (3).

5. Dégazolineur selon la revendication 4, **caractérisé en ce que** les boutons d'espacement (9) sont réalisés dans le corps de support (2).

6. Dégazolineur selon la revendication 4 ou 5, **caractérisé en ce que** trois boutons d'espacement (9) répartis sur la circonférence sont disposés sur le corps de support (2).

7. Dégazolineur selon l'une quelconque des revendications 1 à 6, **caractérisé en ce que** le corps de support (2) présente une bride (10) s'étendant radialement vers l'extérieur.

8. Dégazolineur selon la revendication 7, **caractérisé en ce que** la deuxième lèvre d'étanchéité (6) et les boutons d'espacement (9) s'étendent dans la direction axiale à l'écart de la bride plus ou moins loin.

9. Dégazolineur selon la revendication 8, **caractérisé en ce que** la deuxième lèvre d'étanchéité (6) s'étend plus loin que les boutons d'espacement (9).

10. Dégazolineur selon l'une quelconque des revendications 7 à 9, **caractérisé en ce que** la deuxième lèvre d'étanchéité (6) est fixée sur la face frontale (11) de forme annulaire circulaire de la bride (10) .
